# EUROPEAN PATENT SPECIFICATION

(11) **EP 2 712 742 B1**
(45) Date of publication and mention of the grant of the patent: **01.05.2019**
(21) Application number: 12190218.3
(22) Date of filing: 26.10.2012
(51) Int. Cl.: B60B 5/02, B60B 1/00, B60B 1/08, B60B 1/14

(54) **Motor housing integrated-type spoke for electric bicycle, manufacturing method thereof, wheel assembly having the same and manufacturing method thereof**
Im Motorgehäuse integrierte Speiche für elektrische Fahrräder, Herstellungsverfahren dafür, Radanordnung damit und Herstellungsverfahren dafür
Rayon de type intégré au carter de moteur pour bicyclette électrique, son procédé de fabrication, ensemble de roue l'utilisant et son procédé de fabrication

(30) Priority: 19.09.2012 KR 20120104248
(43) Date of publication of application: 02.04.2014
(73) Proprietor: Mando Corporation, Pyeongtaek-si, Gyeonggi-do (KR)
(72) Inventor: Ko, Chang Bok, Gyunggi-Do (KR); Kim, Jeong Rae, Seoul (KR)
(74) Representative: Pfenning, Meinig & Partner mbB

(56) References cited:
- EP-A1- 0 035 457
- WO-A1-00/68026
- CN-Y- 2 209 609
- CN-Y- 2 633 603
- CN-Y- 201 333 895
- DE-A1- 1 955 568
- DE-A1- 3 637 214
- DE-A1- 10 114 407
- FR-A1- 2 356 524
- GB-A- 2 368 320
- JP-A- S5 675 201
- JP-A- H08 132 802
- JP-U- H0 612 020
- US-A- 3 302 273
- US-A- 5 415 463

## Description

### BACKGROUND

### 1. Field

Embodiments of the present disclosure relate to a wheel assembly for an electric bicycle, and more particularly, to a wheel assembly capable of enabling a motor to be easily installed at a motor driven bicycle and ensuring easy manufacturing and easy assembly process.

### 2. Description of the Related Art

In general, a bicycle is a means of transportation for a short distance, and widely used for enhancement of health or as a hobby.

The bicycle as such is constituted by including a frame forming a body of the bicycle, a handle, a saddle and a front wheel and a rear wheel (hereinafter referred to as a wheel in common) installed at a front side and a rear side of the frame, respectively.

The wheel is provided with a predetermined rigidity to support the weight of the bicycle, the weight of a user or the weight of a load carried by a user. For example, the wheel is constituted by including a rim formed of metal and having a tire installed at an outer surface thereof, a hub to which a rotary shaft of the wheel is coupled, and a spoke structure connecting the hub to the rim. The wheel may be formed in an integrated type wheel for the convenience of the manufacturing process.

However, the spoke structure connecting the hub to the rim is needed to be formed using a plurality of steel lines connecting the rim to the hub while having a predetermined tension, causing a difficulty in the installation and increasing the manufacturing time. If the spoke structure is formed of metal, a desired rigidity is provided but the material cost is increased.

In addition, the integrated type wheel formed of plastic has a low rigidity and may be easily damaged by external impact.

Further, the integrated type wheel needs to be provided with a hub coupled to the rotating shaft.

CN 2 633 603 Y discloses a wheel assembly for an electric bicycle comprising a rim provided in a ring shape and having a rubber wheel installed at an outer circumferential surface thereof, and a spoke structure integrated with a plurality of spokes, which are formed of plastic and radially extending from a center of the spoke structure, and a motor housing, which is provided at the center of the spoke structure and formed of material having a rigidity larger than rigidity of the spokes to accommodate a motor, through an injection molding, wherein a reinforcing member having rigidity larger than a rigidity of the spoke is provided at an end portion of each of the plurality of spokes coupled to the rim, thereby improving a rigidity of the rubber wheel.

JP-A-556 75 201, DE-A-19 55 568 and CN 2 209 609 Y each shows a bicycle wheel assembly comprising a rim provided in a ring shape and having a rubber wheel installed at an outer circumferential surface thereof, and a spoke structure formed as an integral body provided with a plurality of spokes, which is formed of plastic and radially extending from a center thereof, and provided at the center thereof with a hub, which is formed of material having a rigidity larger than a rigidity of the support member and to which a rotating shaft of the rubber wheel is coupled. An end portion of each of the plurality of support members is coupled to an inner circumferential surface of the rim.

CN 201 333 895 Y and JP H 06 120 20 U each discloses the use of a reinforcing member formed of a material having a rigidity larger than that of the material of the spokes provided at the end portion of each of the spokes coupled to the rim.

Each of US-A-5 415 463, DE-A-101 14 407 and WO-A-00/68026 discloses a method of manufacturing a bicycle wheel assembly by forming a rim having a predetermined rigidity and provided in a shape of a ring, and installing an injection molded plastic integrated type spoke structure on the rim.

GB-A-2368320 shows a wheel for a bicycle, comprising a hub, a rim, at least one spoke and at least an connecting flange. All components are separately manufactured. The spoke is connected with the rim by means of the flange.

### SUMMARY

Therefore, it is an aspect of the present disclosure to provide a wheel assembly comprising an integrated-type spoke structure capable of reducing the weight and the manufacturing cost while improving the rigidity.

It is another aspect of the present disclosure to provide a wheel assembly for a bicycle, capable of ensuring easy manufacturing, and if necessary, enabling easy replacement of the wheel.

Additional aspects of the disclosure will be set forth in part in the description which follows and, in part, will be obvious from the description, or may be learned by practice of the disclosure.

In accordance with the present invention, a wheel assembly is configured as defined in claim 1.

Preferred embodiments of this wheel assembly are represented in the dependent claims.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a perspective view illustrating an electric bicycle in accordance with one embodiment of the preset disclosure.
FIG. 2 is a plan view of FIG. 1
FIG. 3 is a side view of FIG. 1.
FIG. 4 is an exploded perspective view illustrating a wheel assembly of the electric bicycle in accordance with the one embodiment of the preset disclosure.
FIG. 5 is an assembled perspective view of FIG. 4.

### DETAILED DESCRIPTION

Reference will now be made in detail to the embodiments of the present disclosure, examples of which are illustrated in the accompanying drawings, wherein like reference numerals refer to like elements throughout.

The present disclosure is characterized in a wheel assembly for an electric bicycle, a spoke structure provided on a wheel and a manufacturing method thereof. Prior to the description of the characteristics of the present disclosure, an electric bicycle adopted with the present disclosure will be described in brief.

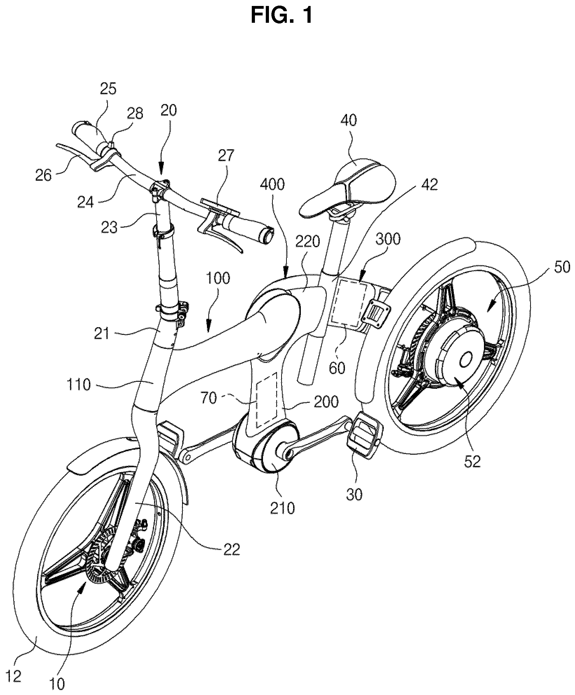

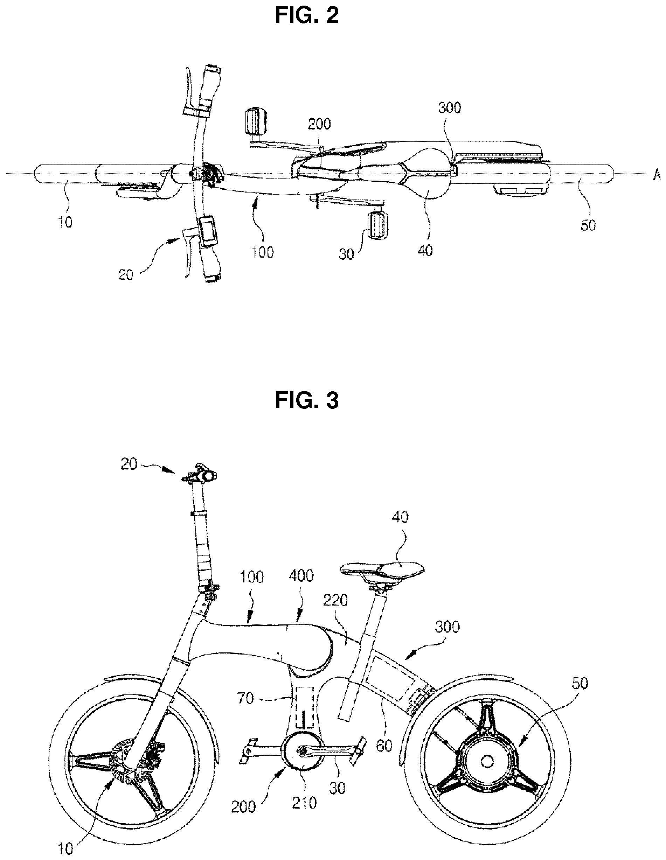

FIG. 1 is a perspective view illustrating an electric bicycle in accordance with one embodiment of the preset disclosure, FIG. 2 is a plan view of FIG. 1, and FIG. 3 is a side view of FIG. 1.

Referring to FIGS. 1 to 3, an electric bicycle in accordance with an embodiment of the present disclosure includes a front frame 100 provided with a front wheel 10 and a handle portion 20, a center frame 200 provided with a pedal 30 and a saddle 40, and a rear frame 300 provided with a rear wheel 50. The front frame 100, the center frame 200 and the rear frame 300 are coupled to one another so as to be rotated on a hinge coupling portion 400 of the center frame 200.

The front frame 100 is provided in the form of a bar having an interior space. A handle tube 110 is provided at one end of the front frame 100, and the center frame 200 is rotatably coupled to the other end of the front frame 100. The handle tube 110 is provided in hollowness such that a handle stem 21 is rotatably coupled to the handle tube 110. The handle stem 21 is provided with a front wheel fixing frame 22 at a lower side of the handle tube 110, and provided with a handle fixing frame 23 at an upper side of the handle tube 110. The front wheel fixing frame 22 is provided by partially bending the handle stem 21 from a center to a lateral side such the front wheel 10 is disposed in the same line ('A' of FIG. 2) with the rear wheel 50. The handle fixing frame 23 supports the center of a handle bar 24 that is provided in the form of a bar. Each end portion of the handle bar 24 is provided with a grip 25 and a brake lever 26 for braking the front wheel 10 and the rear wheel 50. A display apparatus 27 is detachably installed at one side of the handle bar 24 to display information of the electric bicycle, such as speed change or battery of the electric bicycle, and a lever 28 is installed at the other side of the handle bar 24 for speed change.

The center frame 200 has an interior space and is provided in the form of a bar. The pedal 30 is provided at one end of the center frame 200, and the front frame 100 and the rear frame 300 are rotatably coupled to the other end of the center frame 200. The one pair of pedals 30 is provided so as to be rotated on a pedal coupling portion 210 provided on the center frame 200. At an inside of the pedal coupling portion 210, a generator (not shown) is provided to convert a rotary power of the pedal 30 into an electric energy, and the electric energy charges a battery 60 electrically connected to the generator. At the interior space of the center frame 200, an engine control unit (ECU) 70 is provided for the electrical connection and control between the generator and other electronic components.

In addition, the center frame 200 may include a saddle frame 220 on which the saddle 40 is installed. The saddle frame 220 is provided at a rear side thereof with a saddle tube 42 on which the saddle 40 is installed. A saddle rod (not shown) is coupled to the saddle tube 42 to adjust the height of the saddle 40.

The rear frame 300 has an interior space and provided in the form of a bar. The rear wheel 50 is rotatably installed at one end of the rear frame 300, and the center frame 200 is rotatably installed at the other end of the rear frame 300.

At the interior space of the rear frame 300, the battery 60 and a battery management system (not shown) are provided that are electrically connected to the ECU 70 provided on the center frame 200. The motor installed on the rear frame 300 is disposed on the rear wheel 50. The motor (not shown) is accommodated in a hub 13 that is installed on the rear wheel 50, and configured to rotate the rear wheel 50 by receiving a driving force from the battery 60 according to the control of the ECU 70.

In this case, the motor is implemented using an outer rotor scheme. The outer rotor scheme is a type of a motor driving scheme, which has a fixed center shaft and a rotor disposed at a periphery of the center shaft, and the rotor is connected to a rotating body, such as a wheel, to rotate together with the rotating body.

As described above, the front frame 100, the center frame 200 and the rear frame 300 are provided in a foldable structure that enables the front frame 100 and the rear frame 300 are rotated on the center frame 200 by the hinge coupling portion 400.

Hereinafter, a motor housing integrated-type spoke structure and a wheel assembly having the same will be described in detail. The wheel assembly may be used for as the front wheel 10 or the rear wheel 50 of the electric bicycle described above. Although the description is made in relation to an electric bicycle having a foldable structure and operated on electricity using a motor, a battery, and ECU, the present disclosure is not limited thereto. Alternatively, the wheel assembly in accordance with the present disclosure may be applied to a front wheel or a rear wheel of a general bicycle other than the electric bicycle.

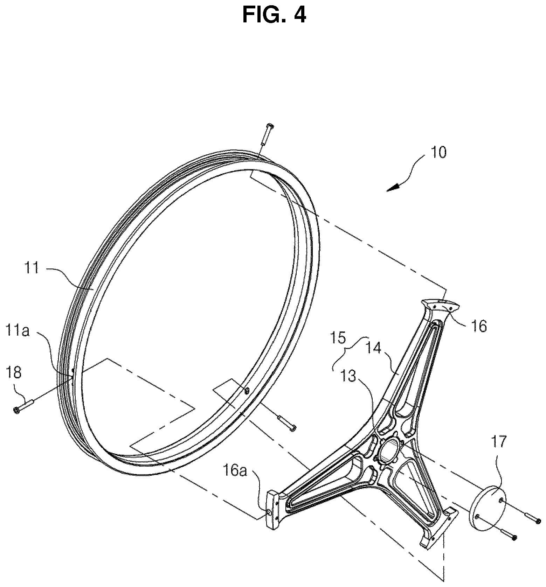

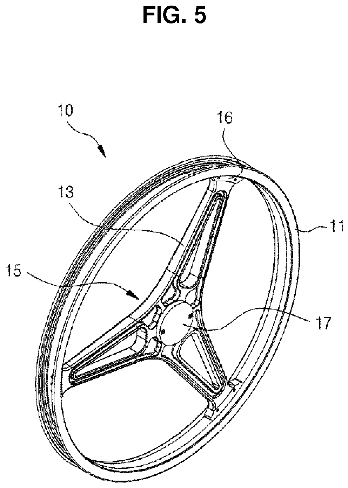

FIG. 4 is an exploded perspective view illustrating a wheel assembly of the electric bicycle in accordance with the one embodiment of the preset disclosure. FIG. 5 is an assembled perspective view of FIG. 4.

Referring to FIGS. 4 and 5, the wheel assembly is provided with a rim 11 having a ring shape, and a spoke structure 15 coupled to the rim 11.

The rim 11 is formed of metal, for example, an aluminum alloy, to improve the rigidity of the rim 11. A tire ('12' in FIG. 1) is installed at an outer circumferential surface of the rim 11.

A spoke structure in accordance with the present disclosure is rotatably installed on the front wheel fixing frame (22 in FIG. 1). The spoke structure is provided with a plurality of spokes 14, which are radially extending from a center thereof, and a hub 13 coupled to a rotating shaft (not shown) of the wheel 10.

In more detail, the spoke structure is formed as an integral body by integrally forming the hub 13, which has rigidity larger than that of the spoke 14 with the center of the spoke 15 having the plurality of spokes 14 formed of plastic, through an injection molding. In this case, the hub 13 may be formed of metal having rigidity larger than that of the spoke 14, for example, an aluminum alloy. Other material having rigidity larger than that of the spoke 14 may be available for the material of the hub 13.

The spoke structure 15 has an end portion of each spoke 14 installed at an inner circumferential surface of the rim 11. In order to improve the rigidity of the spoke structure 15, a reinforcing member 16 may be provided at the end portion of each spoke 14. The reinforcing member 16 may be formed of material having rigidity larger than that of the spoke 14, for example, an aluminum alloy, tungsten, and stainless steel.

The reinforcing member 16 may be integrally formed with the support member 14 through injection molding, similar to the hub 13. That is, the spoke structure is molded as an integral body including the plurality of spokes 14, the hub 13 and the reinforcing member 16 through an injection molding. The injection molding may be implemented using an insert molding process.

A method of manufacturing the spoke structure is as follows. First, the hub 13 and the reinforcing member 16 each having a predetermined rigidity are formed. Thereafter, the hub 13 and the reinforcing member 16 are inserted into a mold, and the spoke structure 15 having the plurality of spokes 14 and formed of plastic is formed while being integrated with the hub 13 and the reinforcing member 16 through an injection molding. In this case, the spoke structure is molded such that the hub 13 is disposed on the center of the spoke structure 15 while the reinforcing member 16 is disposed at each end portion of the spoke 14, as an integral body as shown in FIG. 4.

The rim 11 having a ring shape is manufactured before the manufacturing of the spoke structure as such, and the spoke structure is manufactured as such and coupled to the rim 11, thereby completing the manufacturing of the wheel assembly.

The spoke structure is coupled to the rim 11 in a manner to couple the spoke structure to the inner circumferential surface of the rim 11 through a fastening bolt 18. That is, the reinforcing member 16 provided at each end portion of the spoke 14 coupled to the rim 11 is provided with a fastening hole 16a having a screw thread formed at an inner circumferential surface thereof, and the rim 11 is provided with a through-hole 11a at a position corresponding to the fastening hole 16a. Accordingly, by screwing a fastening bolt 18 to the fastening groove 16a through the through-hole 11a, the spoke structure is coupled to the rim 11.

Meanwhile, reference numeral '17' represents a hub cap that is installed on the hub 13 to cover an end portion of the hub 13 that is coupled to the rotating shaft (not shown) of the wheel 10 to prevent foreign substances from being introduced into between the hub 13 and the rotating shaft.

As described above, the wheel assembly as such is manufactured by separately preparing the spoke structure and the rim, and then forming the spoke structure, which is integrated with the spoke 14 and the hub 13 of different material through an insert injection, thereby reducing the cost and the weight. In addition, no installation component is needed to install the motor, thereby ensuring an easy assembly process.

Although the description has been made in relation that the wheel assembly having the integrated-type spoke structure is configured to be used for the front wheel 50, the present disclosure is not limited thereto. The rear wheel may have the same configuration as the front wheel.

Although a few embodiments of the present disclosure have been shown and described, it would be appreciated by those skilled in the art that changes may be made in these embodiments without departing from the principles of the disclosure, the scope of which is defined in the claims.

## Claims

1. A wheel assembly for an electric bicycle, the wheel assembly comprising:
a rim (11) provided in a ring shape and having a rubber wheel installed at an outer circumferential surface thereof; and
a spoke structure (15) formed as an integral body provided with a plurality of spokes (14), which is formed of plastic and radially extending from a center thereof, and provided at the center thereof with a hub (13), which is formed of material having a rigidity larger than a rigidity of the spokes (14) and to which a rotating shaft of the rubber wheel is coupled,
wherein an end portion of each of the plurality of spokes (14) is coupled to an inner circumferential surface of the rim, and a reinforcing member (16) formed of material having a rigidity larger than a rigidity of the spokes (14) is provided at the end portion of each of spokes (14) that are coupled to the rim (11) to improve the rigidity of the rubber wheel,
**characterized in that** the reinforcing member (16) facing the rim (11) is provided with a fastening hole (16a) having a screw thread, and the rim (11) is provided with a through hole (11a) at a position corresponding to the fastening hole (16a), so that the rim (11) is coupled to the spoke structure (15) by screwing a fastening bolt (18) to the fastening hole (16a) while passing through the through-hole (11a).

2. The wheel assembly of claim 1, wherein the reinforcing member (16) is integrally formed with the spoke (14) through an insert injection.

3. The wheel assembly of claim 2, wherein the reinforcing member (16), the spoke (14), and the hub (13) are integrally formed with one another through an insert injection.

4. The wheel assembly of claim 1, further comprising a hub cap (17) installed at the hub (13) to surround an end portion of the hub (13) that is coupled to the rotating shaft of the rubber wheel.

## Patentansprüche

1. Radanordnung für ein elektrisches Fahrrad, welche Radanordnung aufweist:
eine Felge (11), die in einer Ringform vorgesehen ist und ein auf einer äußeren Umfangsfläche von dieser installiertes Gummirad hat; und
eine Speichenstruktur (15), die als ein integraler Körper gebildet ist, der mit mehreren Speichen (14) versehen ist, der aus Kunststoff gebildet ist und sich von seiner Mitte aus radial erstreckt und in seiner Mitte mit einer Nabe (13) versehen ist, die aus Material gebildet ist, das eine größere Steifigkeit als eine Steifigkeit der Speichen (14) hat, und mit der eine Drehwelle des Gummirads gekoppelt ist,
wobei ein Endbereich jeder der mehreren Speichen (14) mit einer inneren Umfangsfläche der Felge gekoppelt ist und ein Verstärkungsteil (16), das aus Material mit einer Steifigkeit, die größer als eine Steifigkeit der Speichen (14) ist, gebildet ist, an dem Endbereich jeder der Speichen (14), die mit der Felge (11) gekoppelt sind, angeordnet ist, um die Steifigkeit des Gummirads zu verbessern,
**dadurch gekennzeichnet, dass** das der Felge (11) zugewandte Verstärkungsteil (16) mit einem Befestigungsloch (16a) mit einem Schraubgewinde versehen ist, und die Felge (11) mit einem Durchgangsloch (11a) an einer Position entsprechend dem Befestigungsloch (16a) versehen ist, so dass die Felge (11) durch Schrauben eines Befestigungsbolzens (18) in das Befestigungsloch (16a), während er durch das Durchgangsloch (11a) hindurchgeht, mit der Felge (11) gekoppelt ist.

2. Radanordnung nach Anspruch 1, bei der das Verstärkungsteil (16) durch eine Einsatzinjektion integral mit der Speiche (14) gebildet ist.

3. Radanordnung nach Anspruch 2, bei der das Verstärkungsteil (16), die Speiche (14) und die Nabe (13) durch eine Einsatzinjektion integral miteinander gebildet sind.

4. Radanordnung nach Anspruch 1, weiterhin aufweisend eine Nabenkappe (17), die an der Nabe (13) installiert ist, um einen Endbereich der Nabe (13), der mit der Drehwelle des Gummirads gekoppelt ist, zu umgeben.

## Revendications

1. Assemblage de roue pour une bicyclette électrique, l'assemblage de roue comprenant :
une jante (11) qui est constituée selon une forme en anneau et qui comporte une roue en élastique qui est installée au niveau de sa surface circonférentielle externe ; et
une structure de rayons (15) qui est formée en tant que corps d'un seul tenant qui est muni d'une pluralité de rayons (14), laquelle structure est formée en une matière plastique et s'étend radialement depuis son centre et est munie, au niveau de son centre, d'un moyeu (13), lequel moyeu est formé en un matériau qui présente une rigidité plus importante qu'une rigidité des rayons (14) et sur lequel un arbre tournant de la roue en élastique est couplé ; dans lequel :
une partie d'extrémité de chacun de la pluralité de rayons (14) est couplée sur une surface circonférentielle interne de la jante, et un élément de renforcement (16) qui est formé en un matériau qui présente une rigidité plus importante qu'une rigidité des rayons (14) est prévu au niveau de la partie d'extrémité de chacun des rayons (14) qui sont couplés sur la jante (11) de manière à améliorer la rigidité de la roue en élastique ;
**caractérisé en ce que** l'élément de renforcement (16) qui fait face à la jante (11) est muni d'un trou de fixation (16a) qui comporte un filet de vis, et la jante (11) est munie d'un trou traversant (11a) au niveau d'une position qui correspond au trou de fixation (16a), de telle sorte que la jante (11) soit couplée à la structure de rayons (15) par vissage d'un boulon de fixation (18) sur le trou de fixation (16a) tandis que ce même boulon passe au travers du trou traversant (11a).

2. Assemblage de roue selon la revendication 1, dans lequel l'élément de renforcement (16) est formé d'un seul tenant avec le rayon (14) par l'intermédiaire d'une injection d'insert.

3. Assemblage de roue selon la revendication 2, dans lequel l'élément de renforcement (16), le rayon (14) et le moyeu (13) sont formés d'un seul tenant les uns avec les autres par l'intermédiaire d'une injection d'insert.

4. Assemblage de roue selon la revendication 1, comprenant en outre un capuchon de moyeu (17) qui est installé au niveau du moyeu (13) de manière à ce qu'il entoure une partie d'extrémité du moyeu (13) qui est couplée à l'arbre tournant de la roue en élastique.
